# DEMANDE DE BREVET EUROPEEN

(11) **EP 3 241 785 A1**
(43) Date de publication de la demande: **08.11.2017**
(21) Numéro de dépôt: 17169193.4
(22) Date de dépôt: 03.05.2017
(51) Int. Cl.: B65G 23/44, B65G 15/00, B65G 43/02, G01L 5/06

(54) **CONVOYEUR À BANDE AVEC DISPOSITIF D'ÉVALUATION DE LA TENSION DE LA BANDE**

(30) Priorité: 03.05.2016 FR 1653983
(71) Demandeur: Brunone, René, 27950 Saint Marcel (FR)
(72) Inventeur: Brunone, René, 27950 Saint Marcel (FR)
(74) Mandataire: Lavoix

(57) **Abrégé**

Le convoyeur à bande comprend :
- une bande transporteuse (3) ayant au moins un tronçon (17) longitudinal tendu entre des premier et second organes de tension ;
- un dispositif (21) d'évaluation de la tension dudit tronçon (17), agencé pour évaluer, en un point de mesure déterminé situé longitudinalement entre les premier et second organes de tension, un écartement du tronçon (17) par rapport à un niveau de référence, l'écartement étant pris suivant une direction de mesure déterminée formant un angle non nul avec la direction longitudinale.

## Description

L'invention concerne en général les convoyeurs à bande.

Dans un tel convoyeur, la tension de la bande transporteuse a des conséquences directes sur le comportement de la bande, et donc sur le bon fonctionnement du convoyeur. Si la bande n'est pas suffisamment tendue, elle peut se déporter transversalement, et venir frotter sur un élément du châssis, de telle sorte que le châssis risque d'être endommagé. De plus, la bande risque de patiner autour du tambour de retournement moteur au démarrage. Par ailleurs, les protections, les éléments tournants et les autres éléments susceptibles d'être en contact avec la bande peuvent être usés prématurément du fait du flottement de la bande.

Dans ce contexte, l'invention vise à proposer un convoyeur à bande ne présentant pas les défauts ci-dessus.

A cette fin, l'invention porte sur un convoyeur comprenant :
- une bande transporteuse ayant au moins un tronçon longitudinal tendu entre des premier et second organes de tension ;
- un dispositif d'évaluation de la tension dudit tronçon, agencé pour évaluer, en un point de mesure déterminé situé longitudinalement entre les premier et second organes de tension, un écartement du tronçon par rapport à un niveau de référence, l'écartement étant pris suivant une direction de mesure déterminée formant un angle non nul avec la direction longitudinale.

Le dispositif d'évaluation de la tension permet d'évaluer la tension du tronçon de bande sur lequel il est implanté, ce tronçon étant typiquement une portion du brin de retour de la bande suspendue entre deux stations de support consécutives. La tension est mesurée en évaluant la variation de la flèche du tronçon de bande par rapport à un niveau de référence correspondant typiquement au niveau du tronçon quand la bande est tendue de façon optimale pour un bon fonctionnement. En effet, quand le tronçon de bande n'est pas assez tendu, la flèche du tronçon de bande augmente, de telle sorte que le tronçon se situe sous le niveau de référence. L'écartement augmente quand la tension décroît. Au contraire, si la bande est trop tendue, la flèche du tronçon de bande se réduit. Le tronçon de bande se situe alors au-dessus du niveau de référence.

Le dispositif d'évaluation permet donc de détecter facilement un défaut dans la tension de la bande transporteuse, et de corriger celui-ci avant que d'autres éléments du convoyeur à bande tels que le châssis, ou les éléments de protection, soient endommagés.

Le convoyeur à bande peut également présenter une ou plusieurs des caractéristiques ci-dessous, considérées individuellement ou selon toutes les combinaisons techniquement possibles :
- le convoyeur comprend une pluralité de stations de support de la bande transporteuse, le point de mesure étant situé entre deux stations de support consécutives séparées longitudinalement par une longueur totale déterminée, un point central étant situé longitudinalement à équidistance desdites deux stations de support consécutives, le point de mesure étant situé à une distance longitudinale du point central inférieure à 15% de la longueur totale ;
- la direction de mesure est sensiblement perpendiculaire à la direction longitudinale ;
- le dispositif d'évaluation comprend un capteur de distance à ultrasons ;
- le dispositif d'évaluation comprend :
   - un organe suiveur, posé sur le tronçon audit point de mesure et portant au moins un repère mobile ;
   - un organe fixe, de position indépendante de la tension du tronçon et portant au moins un repère fixe ;
   - l'écartement du tronçon par rapport au niveau de référence étant évalué par la position du repère mobile par rapport au repère fixe ;
- l'un du repère fixe et du repère mobile comprend une fenêtre, l'autre du repère fixe et du repère mobile comprenant au moins une marque n'apparaissant pas dans la fenêtre quand l'écartement du tronçon par rapport au niveau de référence est inférieur à une valeur prédéterminée et apparaissant dans la fenêtre quand l'écartement du tronçon par rapport au niveau de référence est supérieur à la valeur prédéterminée ;
- le repère fixe comprend une marque fixe, le repère mobile comprenant une marque mobile coïncidant avec la marque fixe quand le tronçon de bande présente une tension nominale de fonctionnement ;
- le convoyeur comporte un châssis de guidage et de support de la bande, l'organe suiveur comportant un bras portant un organe d'appui posé sur la bande et une liaison du bras au châssis autorisant un débattement du bras par rapport au châssis dans un plan contenant la direction de mesure ;
- l'organe suiveur comprend un organe d'appui posé sur la bande et une liaison coulissante de l'organe d'appui à l'organe fixe autorisant un coulissement de l'organe d'appui par rapport à l'organe fixe selon la direction de mesure ; et
- l'organe d'appui est une roue.

D'autres caractéristiques et avantages de l'invention ressortiront de la description ci-dessous, donnée à titre indicatif et nullement limitatif, en référence aux figures annexées, parmi lesquelles :
- la figure 1 est une représentation schématique simplifiée d'un convoyeur à bande ;
- la figure 2 est une vue en perspective du dispositif d'évaluation de la tension du convoyeur de l'invention, pour un premier mode de réalisation de l'invention ;
- la figure 3 est une représentation schématique de la forme d'un tronçon de bande quand la bande a sa tension nominale de fonctionnement (traits pleins) et quand elle a une tension plus faible (traits interrompus) ;
- la figure 4 est une vue agrandie d'une partie de la figure 2, montrant un second mode de réalisation de l'invention ;
- la figure 5 est une représentation schématique de la position de l'organe d'appui, du repère mobile et du repère fixe quand la bande est à sa tension nominale et quand la bande présente une tension anormalement basse ; et
- la figure 6 est une représentation schématique simplifiée d'un convoyeur à bande illustrant une variante du premier mode de réalisation de l'invention.

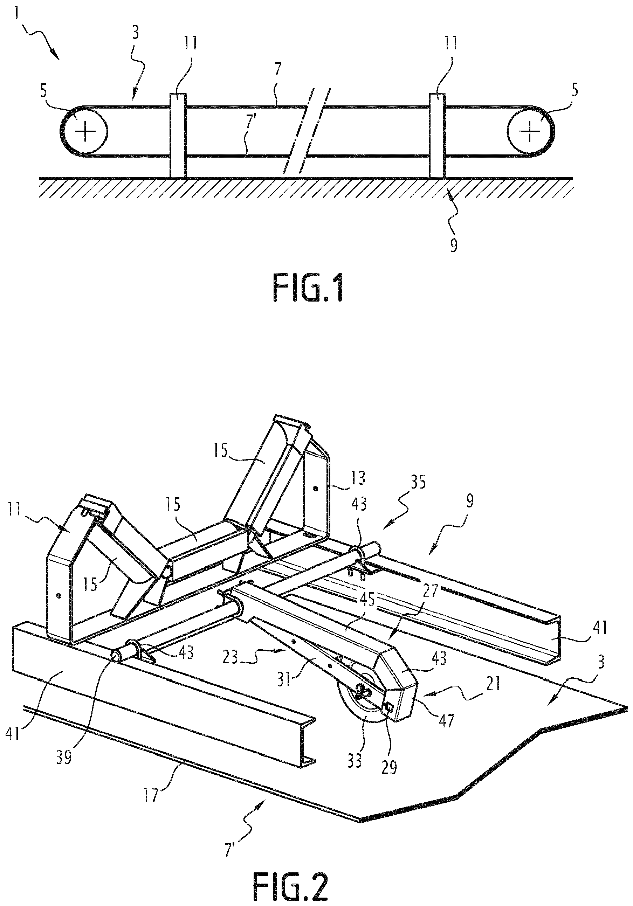

Le convoyeur à bande 1 représenté sur la figure 1 est destiné au transport de matériaux en vrac, par exemple de matériaux divisés tels que du sable, des graviers. Il comprend une bande transporteuse 3, typiquement, agencée en boucle autour de tambours 5 de retournement situés aux deux extrémités du convoyeur à bande. La bande comporte ainsi deux brins 7,7', chaque brin 7,7' s'étendant d'un tambour de retournement 5 à un autre.

Par ailleurs, le convoyeur à bande 1 comporte un châssis 9 de guidage et de support de la bande 3. Ce châssis 9 comprend plusieurs stations de support 11, réparties longitudinalement le long du convoyeur à bande. Le brin 7 de la bande transporteuse est prévu pour le transport des matériaux. Il est agencé en forme d'auge.

A cette fin, et comme visible sur la figure 2, les stations de support 11 dédiées aux brins de transport comportent une structure porteuse 13 et une pluralité d'organes de support 15 montés sur la structure porteuse 13.

Le brin de transport 7 repose directement sur les organes de support 15. Dans l'exemple représenté sur la figure 2, la station de support comporte trois organes de support 15, un organe central 15 sensiblement horizontal et deux organes latéraux 15 inclinés, disposés de part et d'autre de l'organe central. Typiquement, c'est l'agencement des organes de support 15 qui confère sa forme en auge profonde au brin de transport 7. Par exemple, les organes 15 sont des rouleaux ou des patins.

Le brin 7' de la bande transporteuse typiquement n'est pas prévu pour transporter des matériaux. Il est désigné par le terme de brin de retour dans la description qui va suivre. De ce fait, sur la plus grande partie de sa longueur, il présente une forme plane, comme illustré sur la figure 2.

En variante, le brin de retour 7' est prévu pour le transport de matériaux. Dans ce cas, il est agencé en auge, comme le brin de transport.

Toutefois, il présente alors des portions planes, typiquement en amont de la station de chargement des matériaux sur le brin de retour, et en aval de la station de déchargement des matériaux à partir du brin en retour.

Les stations de support 11 du brin en retour comportent elles-aussi une structure porteuse 13 et au moins un organe de support 15.

Dans les portions planes du brin de retour, l'organe 15 est sensiblement horizontal. Il s'étend typiquement sur toute la largeur de la bande transporteuse. L'organe de support 15, de nouveau, est un rouleau ou un patin.

Typiquement, certaines stations de support 11 sont dédiées aux brins de transport et d'autres stations de support 11 sont dédiées aux brins retour.

En variante, les stations de support 11 sont communes aux brins de transport et aux brins retour et comportent les organes de support 15 pour le brin de transport et d'autres pour le brin retour.

La bande transporteuse 3 comporte au moins un tronçon longitudinal 17 tendu entre des premier et second organes de tension. Dans l'exemple de réalisation représenté sur la figure 1, le convoyeur à bande est sensiblement rectiligne, chaque brin 7,7' de la bande transporteuse constituant ainsi un tronçon longitudinal tendu entre les deux tambours de retournement 5. Les tambours de retournement constituent ainsi les premier et second organes de tension.

En variante, le convoyeur à bande n'a pas un parcours rectiligne et comporte plusieurs portions rectilignes raccordées par des coudes. Dans ce cas, chaque brin de la bande est subdivisé en plusieurs tronçons longitudinaux 17, chacun tendu entre des organes de tensions situés à ses extrémités, ces organes étant par exemple des tambours de retournement ou des stations de support.

Le convoyeur à bande 1 comprend encore un dispositif 21 d'évaluation de la tension d'un des tronçons longitudinaux 17, visible sur la figure 2.

Typiquement, la tension est sensiblement constante tout au long de la bande, de telle sorte que la tension mesurée au niveau du tronçon 17 est représentative de la tension de toute la bande.

Le dispositif d'évaluation 21 est agencé pour évaluer, en un point de mesure déterminé, un écartement e du tronçon par rapport à un niveau de référence Nréf. L'écartement e correspond typiquement à la flèche du tronçon 17.

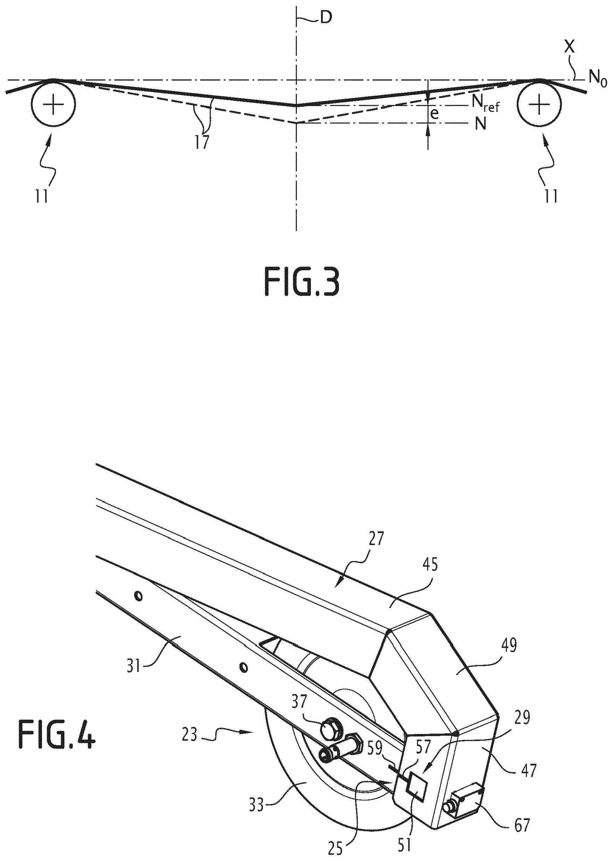

L'écartement est pris suivant une direction de mesure D, visible sur la figure 3, qui forme un angle non nul avec la direction longitudinale X. Le point de mesure est situé, comme le montre la figure 3, entre deux stations de support 11 consécutives, à proximité du point central situé longitudinalement à équidistance des deux stations de support consécutives 11.

Le point de mesure est situé par exemple à une distance longitudinale du point central inférieure à 15% de la longueur totale L séparant les deux stations 11, de préférence inférieure à 10% de la longueur totale.

Ainsi, le point de mesure est situé à l'endroit où le tronçon 17 de bande transporteuse présente une flèche la plus grande possible.

Le niveau de référence Nréf est typiquement le niveau du tronçon de bande 17 au point de mesure quand ce tronçon 17 présente une tension nominale recommandée pour le fonctionnement du convoyeur à bande. Cette tension nominale est spécifiée par le constructeur du convoyeur à bande, en fonction d'un certain nombre de paramètres tels que la vitesse de déplacement de la bande transporteuse, sa charge par unité de longueur, le parcours du convoyeur à bande, etc...

Comme visible sur la figure 3, le tronçon 17 de bande est à un niveau N₀ au niveau des organes de support 15. Du fait que la bande transporteuse est dans un matériau non rigide, le tronçon de bande, au niveau du point de mesure est à un niveau inférieur au niveau N₀. Si la tension du tronçon de bande 17 est inférieure à la tension nominale, le tronçon de bande au niveau du point de mesure est à un niveau N inférieur au niveau Nréf, comme illustré sur la figure 3. Au contraire si la tension du tronçon de bande est supérieure à la tension nominale, le tronçon de bande au niveau du point de mesure est à un niveau supérieur au niveau Nréf. L'écartement du tronçon de bande par rapport au niveau de référence permet donc d'évaluer la tension du tronçon de bande.

La direction de mesure D forme typiquement perpendiculaire à la direction longitudinale.

De préférence, la direction de mesure est verticale. Dans l'exemple représenté, la direction longitudinale X est horizontale et la direction de mesure D est verticale.

En variante, la direction de mesure D n'est pas verticale. Ceci peut être, par exemple, le cas quand la direction longitudinale est inclinée par rapport à l'horizontale, c'est-à-dire quand le convoyeur est installé sur une pente.

Typiquement, le dispositif 21 d'évaluation de la tension est installé de telle sorte que le point de mesure soit sur le brin retour 7' de la bande transporteuse. En variante, le point de mesure se situe le long du brin de transport 7.

De préférence, le point de mesure est situé dans une zone où la bande transporteuse 3 est plane, c'est-à-dire n'est pas conformée en auge. En variante, le dispositif d'évaluation 21 est agencé de telle sorte que le point de mesure soit situé à un endroit où la bande transporteuse n'est pas plane.

Selon un premier mode de réalisation, le dispositif d'évaluation 21 de la tension comprend :
- un organe suiveur 23, posé sur le tronçon de bande 17 audit point de mesure et portant au moins un repère mobile 25 ;
- un organe fixe 27, de position indépendante de la tension du tronçon de bande 17 et portant au moins un repère fixe 29.

L'écartement du tronçon de bande 17 par rapport au niveau de référence Nréf est évalué par la position du repère mobile 25 par rapport au repère fixe 29.

En effet, le niveau de l'organe suiveur 23, et donc du repère mobile 25, suit celui du tronçon de bande 17 au point de mesure, et varie donc en fonction de la tension du tronçon de bande 17. Au contraire, le niveau du repère fixe 29 est indépendant de la tension du tronçon de bande.

Dans l'exemple représenté sur les figures 2, 4 et 5, l'organe suiveur 23 comprend un bras 31 portant un organe d'appui 33 posé sur la bande, et une liaison 35 du bras 31 au châssis 9 autorisant un débattement du bras 31 par rapport au châssis 9 dans un plan contenant la direction de mesure D.

L'organe d'appui 33 est typiquement une roue montée rotative sur le bras 31 autour d'un axe transversal 37. La roue roule sur une face du tronçon de bande 17 tournée vers le haut.

La liaison 35 est typiquement une liaison pivot autour d'un axe de pivotement transversal.

Par exemple, la liaison 35 comporte un tube transversal 39 rigidement fixé au châssis 9. Le tube 39 est disposé au-dessus du tronçon de bande 17. Comme visible sur la figure 2, le châssis 9 comporte dans l'exemple représenté deux poutres longitudinales 41, disposées transversalement de part et d'autre du tronçon de bande 17. La structure porteuse 13 des stations de support 11 est rigidement fixée aux poutres 41. Les poutres 41 reposent sur le sol par le biais de pieds non représentés.

Des extrémités transversales opposées du tube 39 sont rigidement fixées aux poutres 41 par tous moyens adaptés, par exemple par des cavaliers 43 dans la représentation de la figure 2.

L'organe d'appui 33 est monté à une première partie d'extrémité du bras 31, celui-ci étant monté pivotant autour du tube 39 par une seconde partie d'extrémité opposée à la première.

L'organe fixe 27, dans l'exemple représenté sur les figures, est un bras rigidement fixé au tube 39 par tous moyens adaptés. Ce bras comporte un tronçon longitudinal 45, un tronçon normal 47 orienté sensiblement parallèlement à la direction de mesure D et un tronçon intermédiaire 49 raccordant les tronçons 45 et 47 l'un à l'autre.

Le tronçon 45 est rigidement fixé par une extrémité longitudinale au tube 39, et raccordé par son extrémité longitudinale opposée au tronçon intermédiaire 49.

Il s'étend au-dessus de l'organe suiveur 23, et forme avec celui-ci un angle variable en fonction de la tension du tronçon de bande 17.

Par exemple, les tronçons 45, 47 et 49 de l'organe fixe sont des profilés en U, la roue 33 étant engagée sur une partie de sa périphérie à l'intérieur des tronçons 45, 47 et 49.

Le repère fixe 29 est ménagé sur le tronçon normal 47.

Dans l'exemple représenté, le repère fixe 29 comporte une fenêtre 51, et le repère mobile 25 comporte au moins une marque 53, par exemple une tâche.

En variante, la fenêtre 51 fait partie du repère mobile 25 et la marque 53 du repère fixe 29.

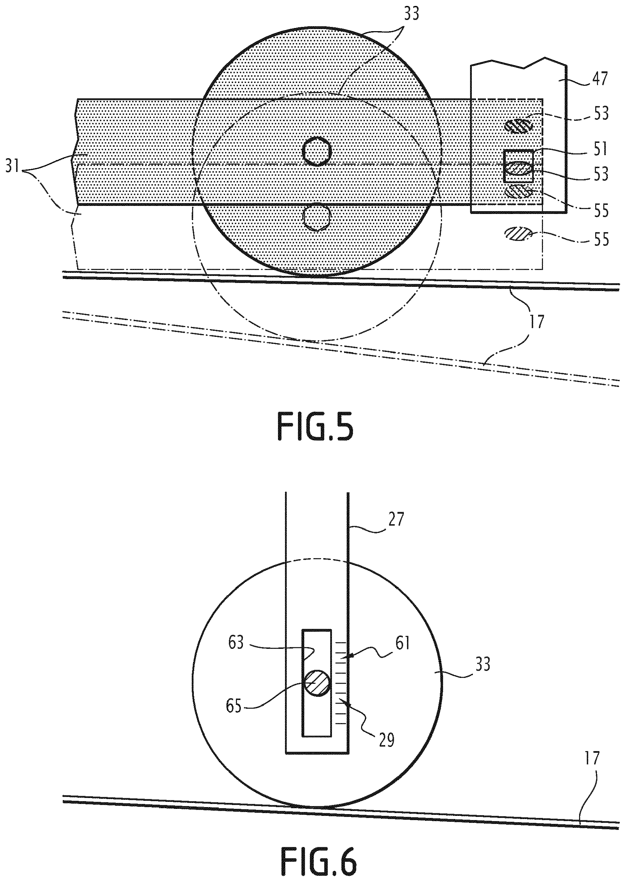

Le repère fixe et le repère mobile sont agencés de telle sorte que la marque 53 n'apparaît pas dans la fenêtre 51 quand l'écartement du tronçon de bande par rapport au niveau de référence Nréf est inférieur à une valeur prédéterminée, et apparaît dans la fenêtre 51 quand l'écartement du tronçon de bande par rapport au niveau de référence Nréf est supérieur à une valeur prédéterminée (voir figure 5).

La marque 53 est ménagée sur la partie d'extrémité du bras 31 portant l'organe d'appui 33. Cette marque 53 est située au-dessus de la fenêtre 51 quand l'écartement du tronçon par rapport au niveau de référence Nréf est nul. Quand la tension du tronçon est inférieure à la tension nominale, l'écartement e vers le bas augmente. Quand la tension du tronçon est inférieure à une tension déterminée, par exemple 80% de la tension nominale, l'écartement devient supérieur à la valeur prédéterminée et la marque 53 apparaît dans la fenêtre 51.

La marque 53 présente une couleur différente de la zone du bras 31 paraissant dans la fenêtre 51 quand le tronçon de bande présente sa tension nominale. Par exemple, elle est de couleur rouge ou de toute autre couleur facilement visible pour un opérateur.

Avantageusement, le repère mobile 25 comporte une autre marque 55 qui apparaît dans la fenêtre 51 quand l'écartement du tronçon de bande 17 par rapport au niveau de référence Nréf est supérieur à une valeur prédéterminée, mais dans le sens inverse de la première tache 53. L'autre marque 55 est sinon invisible.

Plus précisément, et comme visible sur la figure 5, la marque 55 est située sous la fenêtre 51 quand le tronçon de bande 17 présente sa tension nominale. Quand le tronçon de bande 17 présente une tension supérieure à sa tension longitudinale, le tronçon de bande 17 au point de mesure s'écarte du niveau de référence Nréf vers le haut. Quand cet écartement dépasse la valeur prédéterminée, la marque 55 apparaît dans la fenêtre 51.

La marque 55 est par exemple une tâche.

Avantageusement, le repère fixe 29 comporte encore une marque fixe 57, et le repère mobile 25 comprend une marque mobile 59, coïncidant avec la marque fixe 57 quand le tronçon de bande 17 présente sa tension nominale de fonctionnement. Cette situation est illustrée sur la figure 4. Les repères fixe et mobile 57, 59 permettent de vérifier facilement que la tension du tronçon de bande est à sa tension nominale.

Dans l'exemple représenté sur la figure 4, les marques fixe et mobile 57, 59 sont des traits. Ces traits sont alignés quand le tronçon de bande 17 présente sa tension nominale.

En variante, les marques fixe et mobile 57, 59 ne sont pas des traits, mais sont des points ou présentent toute autre forme adaptée.

La marque fixe est ménagée sur le tronçon normal 47 de l'organe fixe 27. La marque mobile est ménagée sur la partie d'extrémité du bras 31 portant l'organe d'appui 33.

En variante, la fenêtre 51 est remplacée par une échelle graduée. La marque 55 est remplacée par un repère qui se déplace le long de l'échelle graduée quand la tension du tronçon de bande varie.

Il est à noter que l'organe suiveur 23 est avantageusement un contrôleur de rotation prévu pour mesurer la vitesse de déplacement de la bande transporteuse 3 par rapport au châssis 9. Il est alors équipé d'un capteur agencé de manière à mesurer la vitesse de rotation de la roue 33. La vitesse de déplacement de la bande 3 est calculée à partir de la vitesse de rotation ainsi mesurée et du diamètre de la roue 33.

L'ajout de l'organe fixe 27, du repère mobile 25 et du repère fixe 29 permet de tirer parti de la présence du contrôleur de rotation pour évaluer de manière simple la tension du tronçon de bande 17.

Selon une variante de réalisation non représentée, l'organe fixe n'est pas un bras fixé au tube 39. Il comporte par exemple, outre le tronçon normal 47, une structure permettant de fixer directement ce tronçon normal 47 au châssis 9, par exemple aux poutres 41.

En revanche, le mode de réalisation illustré sur les figures 2, 4 et 5 est particulièrement commode pour le montage du dispositif 21 d'évaluation de la tension. En effet, le tube 39, l'organe suiveur 23 et l'organe fixe 27 sont initialement assemblés les uns aux autres, puis le tube 39 est fixé sur le châssis.

Une variante du premier mode de réalisation de l'invention va maintenant être détaillée, en référence à la figure 6. Seuls les points par lesquels cette variante de réalisation diffère de celle des figures 2, 4 et 5 seront détaillés ci-dessous.

Dans la variante de réalisation de la figure 6, l'organe suiveur 23 comprend, outre l'organe d'appui 33 posé sur la bande 3, une liaison coulissante 61 de l'organe d'appui 33 à l'organe fixe 27, autorisant un coulissement de l'organe d'appui 33 par rapport à l'organe fixe 27 selon la direction de mesure D. L'organe d'appui 33, comme précédemment, est une roue. En variante c'est un patin ou tout autre organe d'appui adapté.

Par exemple, la roue 33 est montée dans une chape non représentée, elle-même montée coulissante par rapport à l'organe fixe 27 par la liaison coulissante 61. La liaison coulissante 61 comporte par exemple une fente 63 dans laquelle coulisse un organe de guidage 65 lié à l'organe d'appui. Le repère fixe 29 est par exemple une graduation ménagée le long de la fente 63. Le repère mobile est porté par l'organe de guidage 65 et se déplace donc le long de la graduation. La position du repère mobile le long de la graduation permet d'évaluer la tension de la bande. L'organe de guidage 65 est par exemple une tige liée à la chape, ou est l'axe de rotation de la roue 33.

Selon un second mode de réalisation, représenté sur la figure 4, le dispositif d'évaluation 21 comprend un capteur de distance à ultrasons 67.

Ce capteur est agencé pour mesurer la distance entre ledit capteur 67 et le tronçon de bande 17, au point de mesure. Le dispositif d'évaluation 21 comprend en outre un organe tel qu'un calculateur agencé pour déduire l'écartement du tronçon de bande 17 par rapport au niveau de référence Nréf à partir de la distance mesurée.

Par exemple, le calculateur comporte une mémoire dans laquelle est stockée une distance de référence entre le capteur 67 et le tronçon 17 quand le tronçon de bande présente sa tension nominale de fonctionnement. Cette distance de référence est une distance prédéterminée rentrée par l'opérateur dans la mémoire du calculateur, ou encore est mesurée à l'aide du capteur de distance à ultrasons 67 après chaque phase de réglage de la tension de la bande.

L'écartement du tronçon par rapport au niveau de référence est déterminé en soustrayant la distance de référence à la distance mesurée.

Typiquement, le capteur de distance à ultrasons 67 est monté sur une structure fixe, et a donc une position indépendante de la tension du tronçon de bande 17. La structure fixe est par exemple l'organe fixe 27 décrit plus haut en référence aux figures 2, 4 et 5. En variante, la structure fixe est une structure différente, directement fixée sur les poutres 41.

Le capteur à ultrasons 67 est agencé de manière à prendre la distance entre le tronçon de bande et de capteur suivant la direction de mesure D.

En variante, le dispositif d'évaluation comporte à la fois l'organe suiveur 23 et son repère mobile 25, l'organe fixe 27 et son repère fixe 29, et le capteur de distance à ultrasons 67, comme illustré sur la figure 4.

Le fonctionnement du convoyeur à bande va maintenant être décrit.

La bande transporteuse 3 est initialement montée sur le châssis de support 9. Au cours d'une phase de réglage initiale, la tension de la bande transporteuse 3 est réglée à sa tension nominale. Ceci est réalisé avec des moyens prévus à cet effet, par exemple en déplaçant les tambours de retournement.

Le réglage de la tension est contrôlé en utilisant le repère mobile 25 et le repère fixe 29, et plus précisément la marque mobile 59 et la marque fixe 57. L'opérateur vérifie visuellement que les deux marques sont bien placées en coïncidence l'une avec l'autre. Dans l'exemple représenté, il vérifie que les deux traits sont bien alignés l'un avec l'autre.

Au cours du fonctionnement du convoyeur à bande, un opérateur vérifie périodiquement que la tension du tronçon 17 de la bande reste acceptable. Pour cela, il vérifie si l'une des marques 53, 55 apparaît dans la fenêtre 51.

Quand le dispositif d'évaluation comporte un capteur de distance à ultrasons, il vérifie que l'écartement mesuré à l'aide du capteur de distance à ultrasons reste dans une fourchette prédéfinie.

Si l'opérateur voit apparaître une marque 53, 55 dans la fenêtre 51, il arrête la bande transporteuse et procède à un nouveau réglage de la tension de la bande, de manière à ramener celle-ci à sa valeur nominale.

## Revendications

1. Convoyeur à bande, le convoyeur (1) comprenant :
- une bande transporteuse (3) ayant au moins un tronçon (17) longitudinal tendu entre des premier et second organes de tension (5) ;
- un dispositif (21) d'évaluation de la tension dudit tronçon (17), agencé pour évaluer, en un point de mesure déterminé situé longitudinalement entre les premier et second organes de tension (5), un écartement (e) du tronçon (17) par rapport à un niveau de référence (Nréf), l'écartement (e) étant pris suivant une direction de mesure (D) déterminée formant un angle non nul avec la direction longitudinale.

2. Convoyeur selon la revendication 1, **caractérisé en ce que** le convoyeur (1) comprend une pluralité de stations (11) de support de la bande transporteuse (3), le point de mesure étant situé entre deux stations de support (11) consécutives séparées longitudinalement par une longueur totale déterminée, un point central étant situé longitudinalement à équidistance desdites deux stations de support (11) consécutives, le point de mesure étant situé à une distance longitudinale du point central inférieure à 15% de la longueur totale.

3. Convoyeur selon la revendication 1 ou 2, **caractérisé en ce que** la direction de mesure (D) est sensiblement perpendiculaire à la direction longitudinale.

4. Convoyeur selon l'une quelconque des revendications précédentes, **caractérisé en ce que** le dispositif d'évaluation (21) comprend un capteur de distance à ultrasons (67).

5. Convoyeur selon l'une quelconque des revendications précédentes, **caractérisé en ce que** le dispositif d'évaluation (21) comprend :
- un organe suiveur (23), posé sur le tronçon (17) audit point de mesure et portant au moins un repère mobile (25);
- un organe fixe (27), de position indépendante de la tension du tronçon (17) et portant au moins un repère fixe (29);
- l'écartement du tronçon (17) par rapport au niveau de référence (Nréf) étant évalué par la position du repère mobile (25) par rapport au repère fixe (29).

6. Convoyeur selon la revendication 5, **caractérisé en ce que** l'un du repère fixe (29) et du repère mobile (25) comprend une fenêtre (51), l'autre du repère fixe (29) et du repère mobile (25) comprenant au moins une marque (53, 55) n'apparaissant pas dans la fenêtre (51) quand l'écartement du tronçon (17) par rapport au niveau de référence (Nréf) est inférieur à une valeur prédéterminée et apparaissant dans la fenêtre (51) quand l'écartement du tronçon (17) par rapport au niveau de référence (Nréf) est supérieur à la valeur prédéterminée.

7. Convoyeur selon la revendication 5 ou 6, **caractérisé en ce que** le repère fixe (29) comprend une marque fixe (57), le repère mobile (25) comprenant une marque mobile (59) coïncidant avec la marque fixe (57) quand le tronçon de bande (17) présente une tension nominale de fonctionnement.

8. Convoyeur selon l'une quelconque des revendications 5 à 7, **caractérisé en ce que** le convoyeur (1) comporte un châssis (9) de guidage et de support de la bande (3), l'organe suiveur (23) comportant un bras (31) portant un organe d'appui (33) posé sur la bande (3) et une liaison (35) du bras (31) au châssis (9) autorisant un débattement du bras (31) par rapport au châssis (9) dans un plan contenant la direction de mesure.

9. Convoyeur selon l'une quelconque des revendications 5 à 7, **caractérisé en ce que** l'organe suiveur (23) comprend un organe d'appui (33) posé sur la bande (3) et une liaison coulissante (61) de l'organe d'appui (33) à l'organe fixe (27) autorisant un coulissement de l'organe d'appui (33) par rapport à l'organe fixe (27) selon la direction de mesure.

10. Convoyeur selon la revendication 8 ou 9, **caractérisé en ce que** l'organe d'appui (33) est une roue.
